(19)

Europäisches
Patentamt
European
Patent Office
Office européen
des brevets

(11)　**EP 2 020 638 A1**

(12)　**EUROPEAN PATENT APPLICATION**

(43) Date of publication:
　　**04.02.2009　Bulletin 2009/06**

(51) Int Cl.:
　　*G06F 17/50* (2006.01)　　*F01D 5/14* (2006.01)

(21) Application number: **07425485.5**

(22) Date of filing: **31.07.2007**

(84) Designated Contracting States:
　　**AT BE BG CH CY CZ DE DK EE ES FI FR GB GR**
　　**HU IE IS IT LI LT LU LV MC MT NL PL PT RO SE**
　　**SI SK TR**
　　Designated Extension States:
　　**AL BA HR MK RS**

(71) Applicant: **ANSALDO ENERGIA S.P.A.**
　　**16152 Genova (IT)**

(72) Inventors:
　　• **Traversone, Laura**
　　　**16042 Carasco (IT)**
　　• **Bordo, Luca**
　　　**16136 Genova (IT)**

(74) Representative: **Cerbaro, Elena et al**
　　**STUDIO TORTA**
　　**Via Viotti 9**
　　**10121 Torino (IT)**

(54)　**Method for designing turbo-machine blades, specifically gas turbine and steam turbine blades**

(57)　　A method for designing turbo-machine blades includes: determining primary fluid-dynamic data (FDS) related to a plurality of first blade sections ($S_1$, $S_2$, ..., $S_K$) ; determining structural data (SDS); and correlating fluid-dynamic data (FDS) to corresponding structural data (SDS). Furthermore, correlating fluid-dynamic data (FDS) to corresponding structural data (SDS) includes: determining interpolated fluid-dynamic data (FDS'), related to a plurality of second blade sections ($S_{INTH}$) interposed between corresponding first blade sections ($S_1$, $S_2$, ..., $S_K$), starting from primary fluid-dynamic data (FDS); defining a modified fluid-dynamic data set (FDS"), including both primary fluid-dynamic data (FDS) and interpolated fluid-dynamic data (FDS'); and associating modified fluid-dynamic data (FDS") to corresponding structural data (SDS).

Fig.3

EP 2 020 638 A1

**Description**

The present invention relates to a method for designing turbo-machine blades, specifically gas turbine and steam turbine blades.

It is known that in making gas turbine or steam turbine plants, the design of the blades is of paramount importance, because the blades are indeed the elements subjected to the most demanding working conditions and thus more easily subject to deterioration or breakage. Specifically, the blades of gas turbines are constantly subjected to considerable mechanical stress in presence of very high temperatures, which may easily understood if one considers that the total efficiency of the system is strongly influenced by the maximum cycle temperature which may be reached. The increase of maximum cycle temperatures is thus, on one hand, an objective of primary importance, but on the other hand implies the need to make components, namely gas turbine blades, capable of continuously operating in extreme conditions.

One of the most critical aspects in the design of turbine blades is the integration of the data deriving from fluid-dynamic analysis under working conditions with the data which define the mechanical structure of the blades themselves. Indeed, due to the high required computing load, the fluid-dynamic analysis is normally of the two-dimensional type and is conducted on a very limited number of significant blade sections (e.g. five), at different distances from the machine axis. Furthermore, even considering the profile of a same section, the thermodynamic data and the structural data are however provided on grids having nodes with very different positions and density. The instruments which generate the fluid-dynamic data and the structural data cope indeed with entirely different issues and, inevitably, produce results for non-coinciding nodes.

No instruments which allow to automatically interface the fluid-dynamic data and the structural data are currently available. The transfer must therefore be performed manually and thus, however expert and prepared the personnel in charge is, it is impossible to eliminate consistent risks of error due to the bulk of information to be managed. Furthermore, performing gross simplifications which, not rarely, lead to poorly reliable results is inevitable. The consequence is that the blades made according to the design are not capable of offering the expected performance and thus may incur early deterioration or breakage, sometimes with disastrous results.

It is thus the object of the present invention to provide a method for designing turbo-machine blades which allows to overcome the described drawbacks and, specifically, allows the automatic interfacing of fluid-dynamic data and structural data.

According to the present invention a method for designing turbo-machine blades is provided, as claimed in claim 1.

The present invention will now be described with reference to the accompanying drawings which illustrate a non-limitative embodiment thereof, in which:

- figure 1 shows a simplified block diagram of an apparatus implementing a turbo-machine blade designing method according to an embodiment of the invention;
- figure 2a is a chart which shows magnitudes used in the present method;
- figure 2b shows the data in figure 2a in table form;
- figure 3 is a flow diagram related to the present method;
- figure 4 is a chart which shows further magnitudes used in the present method; and
- figure 5 is a chart related to a step of the present method.

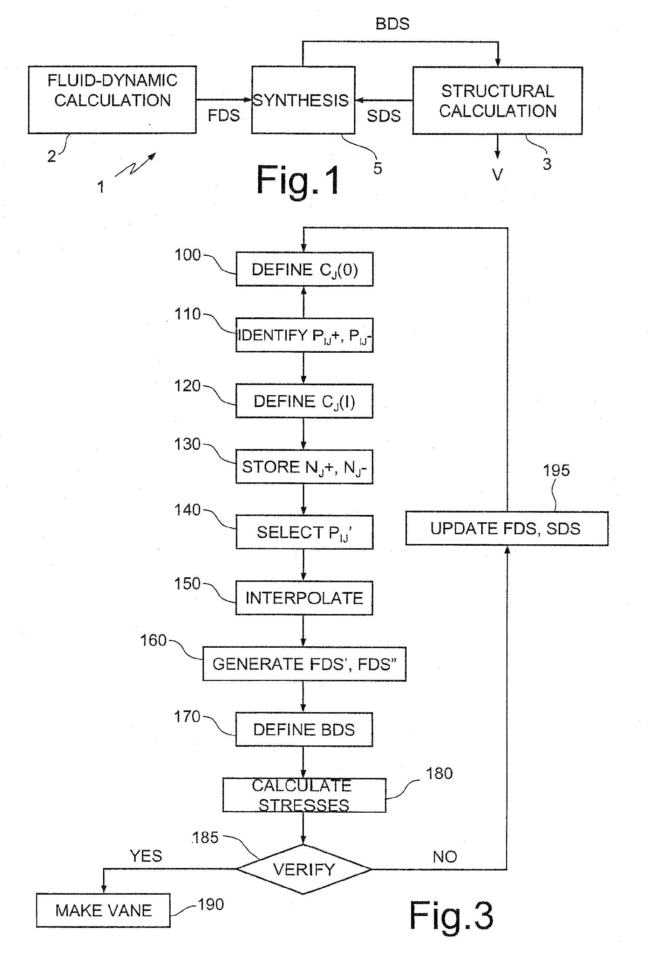

In figure 1, an apparatus for automatically designing turbo-machine blades, specifically gas turbine and steam turbine blades, is indicated by reference number 1. The apparatus 1 comprises a fluid-dynamic calculation module 2, a structural calculation module 3 and a synthesis module 5.

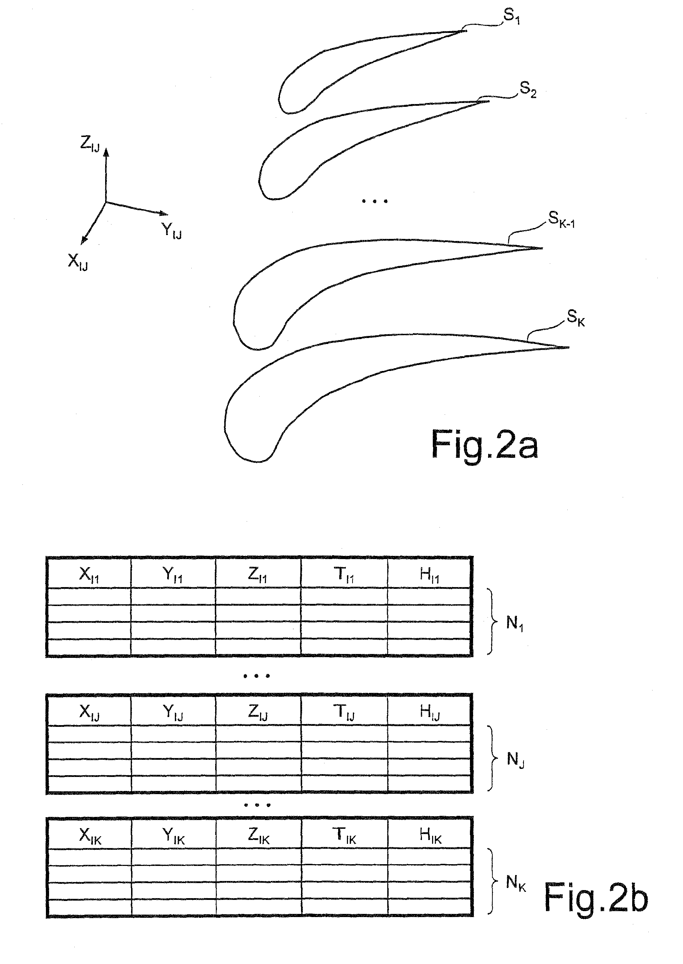

As shown in figure 2a, the fluid-dynamic calculation module 2, of known type, generates a two-dimensional fluid-dynamic data set FDS, on a plurality of primary blade sections $S_1$, $S_2$, ..., $S_K$ (e.g., $K = 5$), at corresponding distances from the machine axis. The fluid-dynamic data FDS are supplied in the form of tables 6 (figure 2b) related to a corresponding number of points $N_1$, $N_2$, ..., $N_K$ along the profile of each primary blade section $S_1$, $S_2$, ..., $S_K$ and comprise, for each point $P_{IJ}$ of the generic primary blade section $S_J$, Cartesian coordinates $X_{IJ}$ (parallel to the machine axis), $Y_{IJ}$, $Z_{IJ}$, a temperature value $T_{IJ}$ and a local heat exchange coefficient value $H_{IJ}$.

The structural calculation module 3, also of known type, generates a structural data set SDS in form of a three-dimensional grid of points, which represent the structure and the mechanical features of the blade being studied. Specifically, the structural data SDS allow to define the mechanical behaviour of the blade in running conditions, once synthesized with the fluid-dynamic data FDS, which are used to define the background conditions.

The fluid-dynamic data FDS and the structural data SDS are supplied to the synthesis module 5, which associates corresponding temperature and local heat exchange values starting from the fluid-dynamic data FDS to points of the three-dimensional structural grid defined by the structural data SDS, as shown in figure 3 and explained below. Specifically, reference will be made to a generic primary blade section $S_J$, meaning the same procedure is also applied to all the others.

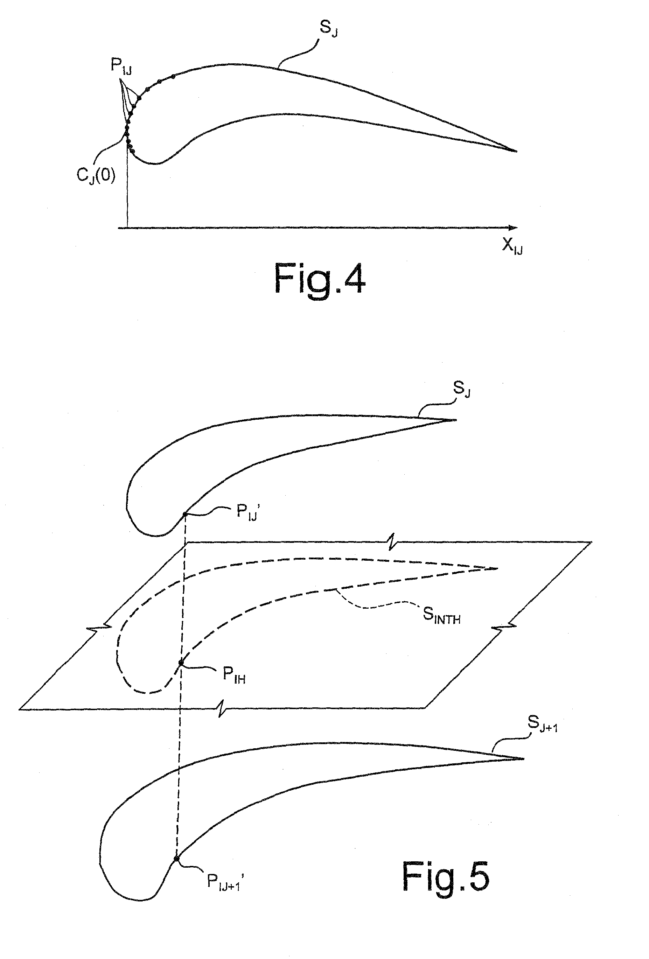

A curvilinear coordinate $C_J(I)$ normalized along its profile (Cf. also figure 4) is initially defined for the primary blade section $S_J$. More in detail, the point $P_{IJ}$ of the profile of primary blade section $S_J$ having minimum coordinate $X_{IJ}$ is identified and chosen as origin $C_J(0)$ for the curvilinear coordinate $C_J(I)$ (block 100). Then, points $P_{IJ}+$ belonging to the throat or pressure face of the primary blade section $S_J$ and points $P_{IJ}-$ belonging to the back or suction face of the primary blade section $S_J$ itself are identified and aggregated (block 110).

The curvilinear coordinate $C_J(I)$ is then defined according to the relation (block 120):

$$C_J(I) = C_J(I-1) + \frac{\sqrt{(X_{I+1J} - X_{IJ})^2 + (Y_{I+1J} - Y_{IJ})^2}}{L_T}$$

where $L_T$ is the length of the primary blade section $S_J$. The curvilinear coordinate $C_J(I)$ is thus positive for the throat points $P_{IJ}+$, where it assumes values comprised between 0 and 1, and negative for the back points $P_{IJ}-$, where it assumes values comprised between -1 and 0.

In this step, the number of throat points $N_J+$ and the number of back points $N_J-$ are counted and stored (such numbers are neither necessarily equal to one another, nor equal for all sections; block 130).

After having defined the curvilinear coordinate $C_J(I)$ for all the primary blade sections $S_1, S_2, ..., S_K$, a maximum number of throat points N+ and a maximum number of back points N- (block 140) are selected from the previously stored throat points numbers $N_J+$ and the previously stored back points numbers $N_J-$ and interpolations are performed to uniform the number and the distribution of the points $P_{IJ}$ on all the primary blade sections $S_1, S_2, ..., S_K$.

In practice, N+ throat points $P_{IJ}+$ and N- back points $P_{IJ}-$ are selected for each primary blade section $S_1, S_2, ..., S_K$. On each primary blade section $S_1, S_2, ..., S_K$, the selected throat points $P_{IJ}+$ have the same curvilinear coordinate values $C_J(I)$ as the throat points $P_{IJ}+$ of the primary blade section $S_1, S_2, ..., S_K$ having the maximum number of throat points N+; and the back points $P_{IJ}-$ have the same curvilinear coordinate values $C_J(I)$ as the back points $P_{IJ}-$ of the primary blade section $S_1, S_2, ..., S_K$ having the maximum number of back points N-. In this manner, the same number of throat points $P_{IJ}+$ and back points $P_{IJ}-$ is identified on each primary blade section. Furthermore, the distribution of the points on the various primary blade sections $S_1, S_2, ..., S_K$ is the same. Points of different primary blade sections $S_1, S_2, ..., S_K$ defined by equal curvilinear coordinate values $C_J(I)$ will be indicated hereinafter as homologous.

Therefore, the Cartesian coordinates $X_{IJ}$, $Y_{IJ}$, the temperature values $T_{IJ}$ and the heat exchange coefficient values $H_{IJ}$ are determined by interpolation for all the homologous points $P_{IJ}'$ defined by the modified curvilinear coordinate $C_J(I)$ for each primary blade section $S_1, S_2, ..., S_K$ (block 150). Cubic spline type interpolation functions are used for this purpose. Furthermore, on the primary blade sections $S_1, S_2, ..., S_K$, the interpolation is performed starting from points $P_{IJ}$ selected in the fluid-dynamic data FDS and thus having known features (e.g. the minimum coordinate points $X_{IJ}$ of each primary blade section $S_1, S_2, ..., S_K$, which define the origin of the curvilinear coordinates).

Subsequently, an interpolated fluid-dynamic data set FDS' is generated (block 160). More in detail, interpolated blade sections $S_{INTH}$ are generated, interposed in equal number between corresponding pairs of primary blade sections $S_1, S_2, ..., S_K$ so that the distance in radial direction between adjacent sections is constant. For example, between each pair of primary blade sections $S_1, S_2, ..., S_K$ there are interposed 20 equidistant interpolated blade sections $S_{INTH}$, each of which includes N+ throat points and N- back points, defined by the curvilinear coordinate $C_J(I)$. Therefore, also the interpolated blade sections $S_{INTH}$ have the same number and the same point distribution as the primary blade sections $S_1, S_2, ..., S_K$. More in detail, Cartesian coordinates $X_{IH}$, $Y_{IH}$, $Z_{IH}$ of interpolated points $P_{IH}$ of each interpolated blade section $S_{INTH}$ are determined by the intersection between the plane on which the interpolated blade section $S_{INTH}$ lays and lines joining pairs of homologous points $P_{IJ}'$ of adjacent primary blade sections $S_1, S_2, ..., S_K$ (see in this regard figure 5). In practice, all the interpolated points $P_{IH}$ have homologous points $P_{IJ}$, defined by equal values of the curvilinear coordinate $C_J(I)$, on the primary blade sections $S_1, S_2, ..., S_K$. Furthermore, temperature values $T_{IH}$ and heat exchange coefficient values $H_{IH}$ which are determined by linear interpolation starting from the temperature values $T_{IJ}$ and the heat exchange coefficient values $H_{IJ}$ of the homologous points $P_{IJ}'$ of the adjacent primary blade sections $S_1, S_2, ..., S_K$ are associated to the interpolated points $P_{IH}$. Preferably, the interpolation is weighed according to the distance between the interpolated blade section $S_{INTH}$ and the adjacent primary blade sections $S_1, S_2, ..., S_K$.

Alternatively to the interpolation by joining lines and to weighed linear interpolation, in an embodiment of the invention, an interpolation by spline-type functions, e.g. cubic, is performed.

At this point, the synthesis module 5 has processed a modified fluid-dynamic data set FDS" which includes fluid-dynamic data FDS and interpolated fluid-dynamic data FDS'. With respect to the fluid-dynamic data FDS initially supplied by the fluid-dynamic calculation module 3, the modified fluid-dynamic data FDS" present a higher density, are homogenous and define a three-dimensional fluid-dynamic grid. For the sake of simplicity, the points of the fluid-dynamic grid will be thereinafter indicated by $P_F$, regardless of whether they are points $P_{IJ}$ of primary blade sections $S_1, S_2, ..., S_K$ or interpolated points $P_{IH}$ of interpolated blade sections $S_{INTH}$.

After, the synthesis module 5 defines background conditions for each point of the structural grid defined by the structural data SDS, according to the modified fluid-dynamic data FDS" (block 170). In practice, the temperature value $T_{SIJ}$ and the thermal exchange coefficient value $H_{SIJ}$ of the closest point $P_F$ of the fluid-dynamic grid (i.e. having minimum Euclidean distance) are associated to each point of the structural grid, generically indicated by $P_S$ and defined by Cartesian coordinates $X_{IS}$, $Y_{IS}$, $Z_{IS}$.

The points $P_S$ of the structural grid and of the corresponding temperature values $T_{SIJ}$ and heat exchange coefficient values $H_{SIJ}$ define a background conditions set BDS, which are returned to the structural calculation module 3 for calculating the thermo-mechanical stresses which the blade is subjected to, under working conditions (block 180). Specifically, the structural calculation module 3 generates, in an intrinsically known manner, validation data V related to the expected response of the blade to stresses.

The validation data V are then compared with the corresponding safety ranges to verify the feasibility of the blade (block 185). If the test result is positive, i.e. if the validation data V do not exceed the safety ranges (YES output from block 185), the blade is made (block 190). Otherwise (NO output from block 185), the blade design data are modified, updated fluid-dynamic data FDS and structural data SDS are generated (block 195) and the described procedure is repeated starting from the determination of the curvilinear coordinate $C_J(I)$.

The method according to the invention is advantageous because it allows to automatically process the fluid-dynamic data and to associate them to structural data for calculating thermo-mechanical stresses. Furthermore, the higher density of the fluid-dynamic data may be chosen in the most convenient manner, so as not to produce significant errors with the necessary approximations and to concurrently contain the required computing load. Specifically, the method allows to thoroughly and accurately define the temperature value gradients and the local heat exchange coefficient value gradients on the entire blade surface, avoiding gross approximations. The data transfer from the fluid-dynamic environment to the structural environment may thus occur extremely rapidly and with a very low error margin. The described method is moreover flexible and equally suitable to be employed for designing rotor and stator blades of gas and steam turbines, as well as of compressors.

It is finally apparent that changes and variations may be made to the described method without departing from the scope of the present invention, as defined in the appended claims. Specifically, it is apparent that other interpolating functions different from those indicated above (cubic spline) may be used to obtain the higher density of the points on the primary blade sections. Furthermore, the number of points on each section may be chosen arbitrarily.

The interpolated blade sections comprised between two adjacent primary blade sections may be arranged with variable pitch instead of being reciprocally equidistant.

**Claims**

1. A method for designing turbo-machine blades comprising:

    determining primary fluid-dynamic data (FDS) related to a plurality of first blade sections ($S_1$, $S_2$, ..., $S_K$);
    determining structural data (SDS); and
    correlating fluid-dynamic data (FDS) to corresponding structural data (SDS);

    **characterized in that** correlating fluid-dynamic data (FDS) to corresponding structural data (SDS) comprises:

    determining interpolated fluid-dynamic data (FDS'), related to a plurality of second blade sections ($S_{INTH}$) interposed between corresponding first blade sections ($S_1$, $S_2$, ..., $S_K$), starting from the primary fluid-dynamic data (FDS);
    defining a modified fluid-dynamic data set (FDS"), including primary fluid-dynamic data (FDS) and interpolated fluid-dynamic data (FDS'); and
    associating modified fluid-dynamic data (FDS") to corresponding structural data (SDS).

2. A method according to claim 1, wherein the modified fluid-dynamic data comprise:

    coordinates of a plurality of first points ($P_F$) of the first blade sections ($S_1$, $S_2$, ..., $S_K$) and of the second blade sections ($S_{INTH}$);
    temperature values ($T_{IJ}$, $T_{IH}$), associated to corresponding first points ($P_F$); and
    heat exchange coefficient values ($H_{IJ}$, $H_{IH}$), associated to corresponding first points ($P_F$).

3. A method according to claim 2, wherein the structural data (SDS) comprise coordinates of a plurality of second points ($P_S$).

4. A method according to claim 3, wherein determining interpolated fluid-dynamic data (FDS') comprises:

defining a normalized curvilinear coordinate ($C_J(I)$) for each first blade section ($S_1$, $S_2$, ..., $S_K$);
determining sets of first homologous points ($P_{IJ}$') having values equal to the normalized curvilinear coordinate ($C_J(I)$) between the first points ($P_F$) of the first blade sections ($S_1$, $S_2$, ..., $S_K$),; and
determining corresponding coordinates ($X_{IJ}$, $Y_{IJ}$, $Z_{IJ}$), corresponding temperature values ($T_{IJ}$, $T_{IJ}$) and corresponding heat exchange coefficient values ($H_{IJ}$) for the first homologous points ($P_{IJ}$').

5. A method according to claim 4, wherein determining sets of first homologous points ($P_{IJ}$') comprises:

determining a number of throat points ($N_J+$) and a number of back points ($N_J-$) for each first blade section ($S_1$, $S_2$, ..., $S_K$);
identifying a maximum number of throat points ($N+$) and a maximum number of back points ($N-$) between the numbers of throat points ($N_J+$) and the number of back points ($N_J-$);

selecting, on each first blade section ($S_1$, $S_2$, ..., $S_K$), first homologous points ($P_{IJ}$') having values of the normalized curvilinear coordinate ($C_J(I)$) equal to corresponding first throat points ($P_{IJ}+$) of the first blade section ($S_1$, $S_2$, ..., $S_K$) with the maximum number of throat points ($N+$) and to corresponding first back points ($P_{IJ}-$) of the first blade section ($S_1$, $S_2$, ..., $S_K$) having the maximum number of back points ($N_J-$).

6. A method according to claim 5, wherein determining first homologous point sets ($P_{IJ}$') further comprises performing interpolations starting from the fluid-dynamic data (FDS) and from corresponding values of the normalized curvilinear coordinate ($C_J(I)$).

7. A method according to claim 6, wherein performing interpolations comprises using spline type interpolating functions.

8. A method according to any claim from 4 to 7, wherein determining interpolated fluid-dynamic data (FDS') comprises determining a plurality of first interpolated points ($P_{IH}$) of the second blade sections ($S_{INTH}$) by interpolation, starting from corresponding first homologous point sets ($P_{IJ}$').

9. A method according to claim 8, wherein determining interpolated fluid-dynamic data (FDS') comprises associating interpolated temperature values ($T_{IH}$) and interpolated heat exchange coefficient values ($H_{IH}$) to corresponding first interpolated points ($P_{IH}$), according to temperature values ($T_{IJ}$) and heat exchange coefficient values ($H_{IJ}$) associated to first homologous points ($P_{IJ}$').

10. A method according to claim 8 or 9, wherein the second blade sections ($S_{INTH}$) are reciprocally equidistant.

11. A method according to any claim from 3 to 10, wherein associating modified fluid-dynamic data (FDS") to corresponding structural data (SDS) comprises associating to second points ($P_S$) temperature values ($T_{IJ}$, $T_{IH}$) and heat exchange coefficient values ($H_{IJ}$, $H_{IH}$) of corresponding first points ($P_F$) having minimum Euclidean distance from the second points ($P_S$).

12. An apparatus for automatically designing turbo-machine blades, comprising processing means (2, 3, 5) configured to implement the method according to any of the preceding claims.

Fig.1

Fig.3

Fig.2a

Fig.2b

$S_J$

$P_{IJ}$

$C_J(0)$

$X_{IJ}$

## Fig.4

$S_J$

$P_{IJ}'$

$S_{INTH}$

$P_{IH}$

$S_{J+1}$

$P_{IJ+1}'$

## Fig.5

**European Patent Office**

**EUROPEAN SEARCH REPORT**

Application Number

EP 07 42 5485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LI ET AL: "Turbine blade temperature transfer using the load surface method" COMPUTER AIDED DESIGN, ELSEVIER PUBLISHERS BV., BARKING, GB, vol. 39, no. 6, 17 May 2007 (2007-05-17), pages 494-505, XP022082375 ISSN: 0010-4485 p. 494, left col., 1st para. p. 495, right col., 2nd full para. p. 496, left col., Step 1. and Step 2. p. 501, right col., Step 3. p. 502, left col., Step 4 and Step 5 ----- | 1-12 | INV. G06F17/50 F01D5/14 |
| Y | KORAKIANITIS T ET AL: "IMPROVED TURBINE-BLADE DESIGN TECHNIQUES USING 4TH-ORDER PARAMETRIC-SPLINE SEGMENTS" COMPUTER AIDED DESIGN, ELSEVIER PUBLISHERS BV., BARKING, GB, vol. 25, no. 5, 1 May 1993 (1993-05-01), pages 289-299, XP000943653 ISSN: 0010-4485 paragraph bridging the two columns on page 292 ----- | 1-12 | |
| A | KAMAKOTI R ET AL: "Fluid-structure interaction for aeroelastic applications" PROGRESS IN AEROSPACE SCIENCES, OXFORD, GB, vol. 40, no. 8, 1 November 2004 (2004-11-01), pages 535-558, XP004809381 ISSN: 0376-0421 the whole document, in particular sections 2., 2.3 and 6. ----- | 1-12 | TECHNICAL FIELDS SEARCHED (IPC) G06F F01D |

The present search report has been drawn up for all claims

| Place of search | Date of completion of the search | Examiner |
|---|---|---|
| Munich | 17 June 2008 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document